# EUROPEAN PATENT SPECIFICATION

(11) **EP 0 412 804 B1**
(45) Date of publication and mention of the grant of the patent: **08.06.1994**
(21) Application number: 90308739.3
(22) Date of filing: 08.08.1990
(51) Int. Cl.: B60S 1/34

(54) **Windscreen wiper device of variable pressure for motor vehicles**
Kraftfahrzeugscheibenwischer mit veränderbarem Druck
Essuie-glace pour véhicules automobiles à pression variable

(30) Priority: 11.08.1989 IT 6769989
(43) Date of publication of application: 13.02.1991
(73) Proprietor: Cooper Industries Italia S.p.A., Milano (IT)
(72) Inventor: Scorsiroli, Marcello, I-10137 Torino (IT)
(74) Representative: MacDougall, Donald Carmichael

(56) References cited:
- DE-B- 1 030 204
- FR-A- 2 518 032
- GB-A- 761 619
- US-A- 2 079 881

## Description

The present invention relates in general to windscreen-wiper devices for motor vehicles.

More specifically, the invention relates to a windscreen-wiper device of the type described in DE-B-1030204 consisting of at least one wiper arm bearing a wiper blade assembly and having a part for connection to a motorized shaft which is arranged at the base of the surface to be wiped and is operated according to an alternating rotary motion, to which corresponds an angular wiping field comprised between an initial extreme position and a final extreme position of the arm, and in which this connection part is articulated to the arm about a transverse axis, and there is interposed, between said connection and the arm, an elastic element which tends to press the arm and the wiper blade assembly against the surface to be wiped.

In windscreen-wiper devices of this type, the disadvantage exists that the pressure applied by the elastic element on the wiper arm, and thus on the blade assembly, is constant. This load must be of such a value as to ensure the necessary adhesion of the blade assembly during its wiping movement, even under the effect of aerodynamic forces which act, during the movement of the vehicle, in the opposite direction to the elastic force. This requirement contrasts, however, with the maintenance on the part of the blade assembly of its own optimum functional characteristics: in fact, in the inactive state of the windscreen-wiper, which corresponds to the initial extreme position of the angular wiping field which the wiper arm takes up, the rubber wiper element with which the blade assembly is provided tends to deform and to adhere to the surface to be wiped through the effect of the force exerted by the elastic element.

The aim of the present invention is to eliminate the abovementioned disadvantage and to produce a windscreen-wiper device of the type defined in the introduction, in which the force applied by the elastic element to the arm, and thus to the wiper blade assembly, is variable so as to on the one hand guarantee an effective wiping action and on the other prevent deformations and damage to the wiper blade assembly in the inactive state of the windscreen-wiper.

According to the invention, this aim is achieved by virtue of the fact that the operating shaft of the wiper arm has its axis forming, with the trace of the final extreme position or of an intermediate position close to the final position of the abovementioned angular wiping field, an angle different from 90° and, with the trace of the initial extreme position, an angle essentially equal to 90°, and of the fact that the load applied by the elastic element to the wiper arm is variable through the effect of the abovementioned angling of the control shaft between a minimum value corresponding to said initial extreme position and a maximum value corresponding to said final extreme position or intermediate position close to the final position.

In a case in which the elastic element consists in known manner of a helical compression spring rolled on a bar which has one end articulated to the connection part about a second transverse axis which is staggered in relation to said transverse axis of articulation of the arm and the opposite end guided in an axially slidable manner relative to the arm, the angle formed between the axis of the motorized shaft and the trace of the final extreme position or of an intermediate position close to the final position of the angular wiping field is of the order of 75°.

In such a case, the windscreen-wiper advantageously comprises a second helical compression spring which acts in parallel with said spring and has a greater rigidity than the latter.

The arrangement is such that, in the rest position of the windscreen-wiper (that is to say in the abovementioned initial extreme position of the arm), the first helical compression spring is partially compressed and exerts a certain, limited, load. The second spring is at its free length and does not exert load.

Through the effect of the displacement of the arm towards the final extreme position during the functioning of the windscreen-wiper, the first helical spring is subjected to further compression and its load increases while, at the same time, the second spring also is gradually compressed in such a manner that, in the working position of the windscreen-wiper which is most critical for the purposes of visibility, the optimum load for perfect cleaning is obtained.

The invention will now be described in detail with reference to the attached drawings which are provided by way of non-limitative example and in which:
Figure 1 is a schematic perspective view of a windscreen-wiper device for motor vehicles according to the invention;
Figure 2 is a perspective view, in partial cross-section and on enlarged scale, of a part of the windscreen-wiper device;
Figure 3 is a view in longitudinal cross-section and on enlarged scale of the device represented in a first position and
Figure 4 is a view similar to Figure 3, in a second position of the windscreen-wiper.

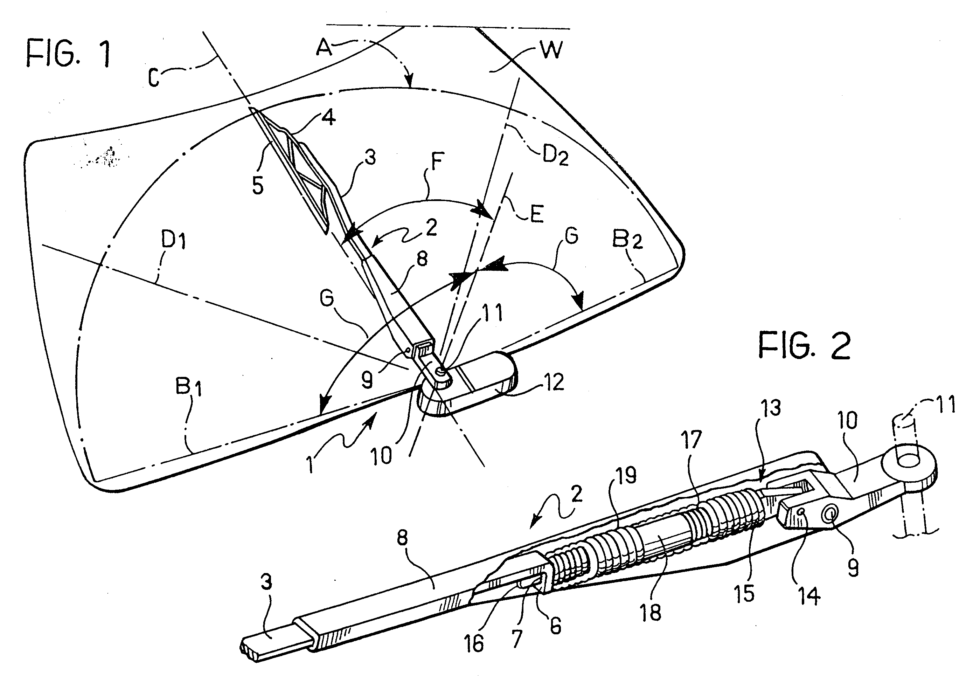

Referring initially to Figure 1, W indicates a window of a motor vehicle, for example the windscreen or the rear window, with which is associated a windscreen-wiper device which is generically indicated by 1. In the illustrated example, the windscreen-wiper is of the single-arm type, that is to say provided with a single wiper arm 2 which is arranged to wipe the surface of the window W according to an angular wiping field A which has an angular size of close to 180°. It must, however, be noted that the invention is equally applicable to windscreen-wiper devices of double-arm or triple-arm type, in which each arm covers a smaller angular wiping field, for example of close to 90°.

In the angular field covered by the single arm 2, it is possible to locate a first initial extreme position B₁, which corresponds to that taken up by this arm 2 at rest, that is to say in the inoperative state of the windscreen-wiper device 1, a central position C and a second initial extreme position B₂, which is opposite the initial position B₁ and corresponds to that in which the angular movement of the arm 2 is reversed. The central position C, which in the case of a windscreen-wiper having a number of arms corresponds to the initial extreme position B₂ off each arm, will henceforward be called the "final" extreme position, with reference to two symmetrical half-fields into which the wiping field A is ideally subdivided between this position C and each of the positions B₁, B₂ respectively. D₁ and D₂ indicate two intermediate positions of the arm 2 within these half-fields.

The arm 2 comprisies in a manner known per se a rod 3 bearing at one end a wiper blade assembly 1 provided with a wiper blade made of elastomeric material 5.

The other end of the rod 3 forms a bent tongue 6 provided with a central opening 7, and is rigidly connected to a cover or casing 8. This cover 8 is articulated about a transverse pivot 9 on a connection or block part 10 keyed onto a control shaft 11, which is operated by means of a motorized unit 12 of conventional type. The motorized unit 12 operates the control shaft 11 according to an alternating rotary motion, so as to move the wiper arm 2 according to the angular movement to and fro across the wiping field A.

13 indicates a spring-guide bar articulated to the connection part 10 about a transverse pivot 14 which is parallel to the pivot 9 and staggered in front and upwards, with reference to the drawings, in relation to the latter. The articulation end of the bar 13 forms a support 15 and the opposite end 16 is slidable with play through the hole 7 of the bent extension 6 of the rod 3.

On the bar 13 there is rolled a first helical compression spring 17 of low rigidity, which reacts on one side against the support 15 and on the opposite side against the bent extension 6. On the first helical spring 17 there is rolled coaxially, a tubular separating element 18 being interposed, a second helical spring 19 of greater rigidity, which also reacts between the support 15 and the bent extension 6.

The springs 17 and 19 have the function of pressing the arm 2, and thus the wiper blade 5, into pressure contact against the surface of the window W. According to the invention, the pressure force is at a minimum in the initial extreme positions B₁, B₂ of the wiping field A, and at a maximum in the final position C and the intermediate positions close to the latter. This is obtained by virtue of the fact that the axis of the control shaft 11, indicated by E, is inclined in relation to the general plane of the window W at an angle F of less than 90° with reference to the trace of the final extreme position C (or of intermediate positions close to the final position) of the wiping field A, and at an angle G which is essentially equal to 90° in relation to the traces of the initial extreme positions B₁, B₂.

In the case of the illustrated example, the angle F between the axis E and the trace C is of the order of 75°.

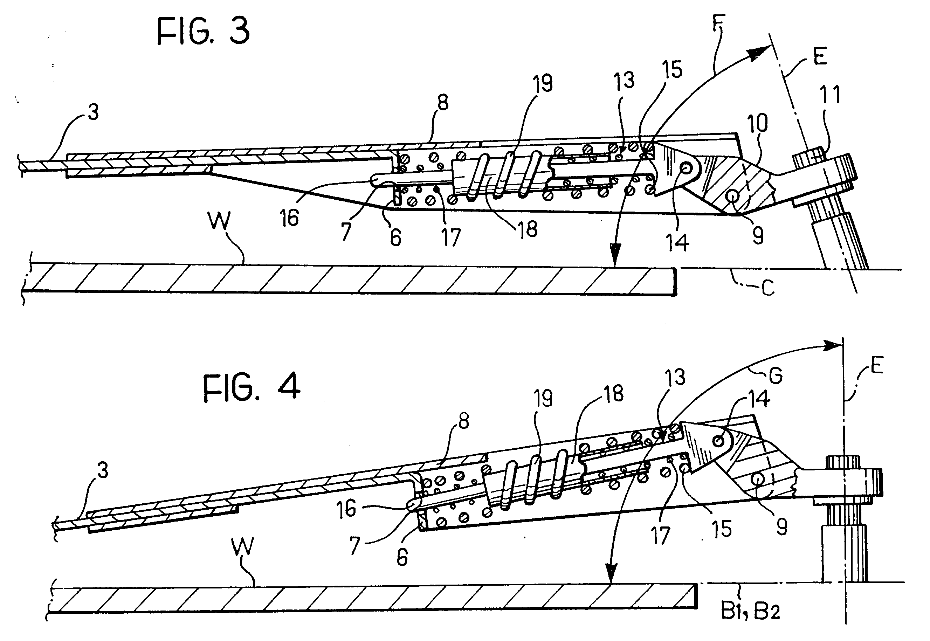

By virtue of this arrangement, when the windscreen-wiper 1 is inoperative, or else when the wiper arm 2 is maintained in a stationary state in the initial position B₁ (or B₂), the connection part 10 is essentially parallel to the surface W and the bar 13 is in the retracted position in relation to the opening 7 of the bent extension 6 illustrated in Figure 4: in this position, the internal low-load spring 17 is slightly compressed whereas the spring 19 is at its free length, that is to say of undeformed shape, as a result of which the elastic force applied to the blade 5 against the surface of the window W is at a minimum and such that the risk of adhesion and deformation of the wiper blade 5 is reduced appreciably.

As soon as the windscreen-wiper device 1 is operated, the elastic force applied to the blade assembly 4 increases progressively as the arm 2 moves from the initial position B₁ towards the final position C in which the pressure of the blade assembly 4 against the surface of the window W is at a maximum. In this position, in fact, the bar 13 assumes, through the effect of the angling F, the shape represented in Figure 3 in which it is advanced in relation to the opening 7 of the bent extension 6. The advance is due to the inclination of the connection part 10 in relation to the surface W and to the consequent lowering of the pivot 14 on the arched trajectory centred on the axis of the pivot 9. In this configuration, both the internal spring 17 and the external spring 19 of greater rigidity are greatly compressed, in such a manner that the wiper blade 5 is pressed with an optimum load for perfect cleaning of the window W.

This load decreases progressively as the arm 2 is moved from the final position C towards the initial extreme position B₂ (or B₁) in which it is once again at a minimum.

In a modifiction in which the compression springs 17 and 19 are replaced by one or more extension springs which are capable of performing the same function, the same technical effect of variation of the pressure of the windscreen-wiper blade assembly 4 against the surface to be wiped W can be obtained by means of an angle F between the axis E of the control shaft 11 and the trace C of the final position of the arm 2 which is greater than 90°, for example of the order of 105°.

## Claims

1. Windscreen-wiper device for motor vehicles, including at least one wiper arm (2) bearing a wiper blade assembly (4) and having a part (10) for connection to a motorized shaft (11) which is arranged at the base of the surface (W) to be wiped and is operated according to an alternating rotary motion, to which corresponds an angular wiping field (A) comprised between an initial extreme position (B₁, B₂) and a final extreme position (C) of the arm (2), said connection part (10) being articulated to the arm (2) about a transverse axis (9), there being interposed between said connection (10) and the arm (2), an elastic element (13,17,19) which tends to press the arm (2) and the wiper blade assembly (4) against the surface (W) to be wiped, characterized in that the shaft (11) has its axis (E) forming, with the trace of the final extreme position (C) or of an intermediate position close to the final position of the abovementioned angular wiping field (A), an angle different from 90° (F) and, with the trace of the initial extreme position (B₁, B₂), an angle essentially equal to 90° (G), and the load applied by the elastic element (13,17 19) to the wiper arm (2) is variable through the effect of the abovementioned angling of the control shaft (11) between a mimimum value corresponding to said initial extreme position (B1, B2) and a maximum value corresponding to said final extreme position (C) or intermediate position close to the final position.

2. Device according to Claim 1, in which the elastic element (13, 17 19) consists of a helical compression spring (17,19) rolled on a bar (16) which has one end articulated to the connection part (10) about a second transverse axis (14) which is staggered in relation to said transverse axis (9) of articulation of the arm (2) and the opposite end guided in an axially slidable manner relative to the arm (2), characterized in that the angle (F) formed between the axis (E) of the motorized shaft (11) and the trace of the final extreme position (C) or of an intermediate position close to the final position of the abovementioned angular wiping field (A) is of the order of 75°.

3. Device according to Claim 2, characterized in that the elastic element (13, 17, 19) comprises a second helical spring (19) which acts in parallel with spring (17) and has a greater rigidity than the spring (17).

## Patentansprüche

1. Scheibenwischereinrichtung für Kraftfahrzeuge, die wenigstens einen Wischerarm (2) umfaßt, der eine Wischerblattanordnung (4) trägt und ein Teil (10) zur Anbringung an einer von einem Motor angetriebenen Welle (11) aufweist, die an der Unterseite der zu wischenden Fläche (W) angeordnet ist und entsprechend einer wechselnden Drehbewegung angetrieben wird, der ein winkeliges Wischfeld (A) entspricht, das sich zwischen einer äußeren Ausgangsstellung (B₁, B₂) und einer äußeren Endstellung (C) des Arms (2) befindet, wobei das Anbringungsteil (10) um eine Querachse (9) drehbar an dem Arm (2) angebracht ist, wobei sich zwischen der Anbringung (10) und dem Arm (2) ein elastisches Element (13,17,19) befindet, das den Arm (2) und die Wischerblattanordnung (4) an die zu wischende Fläche (W) drückt, **dadurch gekennzeichnet,** daß die Achse (E) der Welle (11) mit der Linie der äußeren Endstellung (C) oder einer Zwischenstellung in der Nähe der Endstellung des obenerwähnten winkeligen Wischfeldes (A) einen von 90° verschiedenen Winkel (F) bildet, und mit der Linie der äußeren Ausgangsstellung (B₁, B₂) einen im wesentlichen 90° entsprechenden Winkel (G) bildet, und daß die durch das elastische Element (13,17,19) auf den Wischerarm (2) ausgeübte Last durch die Wirkung des erwähnten Schwenkens der Steuerwelle (11) zwischen einem Minimalwert, der der äußeren Ausgangsstellung (B1, B2) entspricht, und einem Maximalwert, der der äußeren Endstellung (C) oder Zwischenstellung in der Nähe der Endstellung entspricht, verändert werden kann.

2. Einrichtung nach Anspruch 1, wobei das elastische Element (13,17,19) aus einer spiralförmigen Druckfeder (17,19) besteht, die auf einen Stab (16) gewickelt ist, dessen eines Ende um eine zweite Querachse (14) drehbar, die in bezug auf die Querachse (9) der Drehung des Arms (2) versetzt ist, an dem Anbringungsteil (10) angebracht ist, und dessen gegenüberliegendes Ende auf axial verschiebbare Weise in bezug auf den Arm (2) geführt wird, **dadurch gekennzeichnet,** daß der zwischen der Achse (E) der von einem Motor angetriebenen Welle (11) und der Linie der äußeren Endstellung (10) oder einer Zwischenstellung in der Nähe der Endstellung des obenerwähnten winkeligen Wischfeldes (A) gebildete Winkel (F) eine Größe von 75° aufweist.

3. Einrichtung nach Anspruch 2, **dadurch gekennzeichnet**, daß das elastische Element (13,17,19) eine zweite Spiralfeder (19) umfaßt, die parallel zu Feder (17) wirkt und eine größere Steifigkeit als die Feder (17) aufweist.

## Revendications

1. Dispositif d'essuie-glaces pour véhicules à moteur, comprenant au moins un bras d'essuie-glaces (2) supportant un ensemble à lames d'essuie-glaces (4) et ayant une partie (10) pour la liaison à un arbre moteur (11) qui est disposé à la base de la surface à essuyer (W) et qui est actionné selon un mouvement de rotation alternatif, auquel correspond un champ d'essuyage angulaire (A) compris entre une position extrême initiale (B1, B2) et une position extrême finale (C) du bras (2), ladite partie de liaison (10) étant articulée au bras (2) autour d'un axe transversal (9), un organe élastique (13, 17, 19) qui tend à presser le bras (2) et l'ensemble à lames d'essuie-glaces (4) contre la surface (W) qui doit être essuyée, étant interposé entre ladite liaison (10) et le bras (2), caractérisé en ce que l'arbre (11) a son axe (E) formant, avec la trace de la position extrême finale (C) ou avec une position intermédiaire proche de la position finale du champ d'essuyage angulaire (A) mentionné ci-dessus, un angle différent de 90° (F) et, avec la trace de la position extrême initiale (B1, B2), un angle sensiblement égal à 90° (G), et la charge appliquée par l'organe élastique (13, 17, 19) au bras d'essuie-glaces (2) est variable grâce à l'effet de la position angulaire mentionnée ci-dessus du bras de commande (11) entre une valeur minimale correspondant à ladite position extrême initiale (B1, B2) et une valeur maximale correspondant à ladite position extrême finale (C) ou à une position intermédiaire proche de la position finale.

2. Dispositif selon la revendication 1, dans lequel l'organe élastique (13, 17, 19) comprend un ressort de compression hélicoïdal (17, 19) enroulé sur la barre (16) qui a une extrémité articulée à la partie de liaison (10) autour d'un second axe transversal (14) qui est décalé par rapport audit axe transversal (9) d'articulation du bras (2) et l'extrémité opposée guidée d'une manière coulissante axialement par rapport au bras (2), caractérisé en ce que l'angle (F) formé entre l'axe (E) du bras moteur (11) et la trace de la position extrême finale (C) ou de la position intermédiaire proche de la position finale du champ d'essuyage angulaire (A) mentionné ci-dessus est de l'ordre de 75°.

3. Dispositif selon la revendication 2, caractérisé en ce que l'organe élastique (13, 17, 19) comprend un second ressort hélicoïdal (19) qui agit en parallèle avec le ressort (17) et qui a une plus grande rigidité que le ressort (17).
